# EUROPEAN PATENT APPLICATION

(11) **EP 3 734 508 A1**
(43) Date of publication of application: **04.11.2020**
(21) Application number: 19171760.2
(22) Date of filing: 30.04.2019
(51) Int. Cl.: G06K 9/62

(54) **CLASSIFICATION MODEL FOR CONTROLLING A MANUFACTURING PROCESS**

(71) Applicant: Siemens Aktiengesellschaft, 80333 München (DE)
(72) Inventor: Galabov, Filip, 80807 München (DE); Graichen, Andreas, 60211 Norrköping (SE); Reitinger, Axel, 81377 München (DE); Lindstam, Johan, 60371 Norrköping (SE); Otte, Clemens, 81739 München (DE)

(57) **Abstract**

The invention is directed to controlling a manufacturing process by a computer-generated classification model. This is combined with a reward system based on a distributed ledger and smart contracts. The classification model is trained by the following steps: Providing data entities being indicative of a property of a manufacturing of a product. Acquiring labels for each of the data entities from an agent. Determining labeling metrics based on the acquiring of the agent. Training the classification model, wherein the training set comprises the data entities and their labels. Validating the trained classification model yielding a classifier score. Training a labeling score model based on the data entities, the respective labels, the labeling metrics and the classifier score. Determining a labeling score for the agent based on the labeling score model, the labels and the set of labeling metrics.

## Description

### Technical field

The invention relates to the field of controlling of manufacturing processes based on machine learning and artificial intelligence, and more particularly is directed to a controlling apparatus for controlling a manufacturing process and a method for controlling a manufacturing process based on a classification model, and a computer-implemented method for training a classification model for controlling a manufacturing process.

### Background

For controlling a manufacturing process based on a classification model, the classification model has to be trained with a suitable training set and this training set has to be generated. One way of training such a classification model is supervised learning, wherein a training set comprises data entities, which are to be classified by the classification model, and a classification of the data entities, which is provided by a supervisor, i.e., in particular, by users which classify the data entities into different classes or categories. Such a classification may be performed by assigning a label to each of the data entities, wherein data entities with the same label are within the same category or class.

When training the classification model, the classification model is generated or adapted such that it classifies the data entities according to the classification provided by the training set. Consequently, when using the classification model for classification of data entities, which may be indicative of a manufacturing process or a step thereof, data entities that are equal to a data entity of the training set will be classified to the same class or category and also data entities that are similar to a data entity of the training set will be classified accordingly. Based on this classification, the manufacturing process may be controlled, in particular, by changing a process parameter such that, when a respective manufacturing step is performed with the adapted process parameter, the respective data entities match, i.e., are, in particular, classified to a category or class that indicates a normal/wanted/preferred operation.

The effectiveness and/or quality of controlling such a manufacturing process based on such a classification model depends on the ability of the classification model to classify the data entities into the correct categories, and hence, as the classification model is trained based on the training set, depends on the training set. However, labelling by users may be specific to the individual user, such that different users may enter different labels for the same category of data entities, and also may vary over time for a particular user. Moreover, when labelling is performed over an extended period of time, concentration of the users may decrease, and thus, the accuracy of the labels, i.e., the categorization may decrease.

In order to ensure a certain level of quality of the training set, usually, the performance of the users, which label or classify the data entities of the training set, is tracked by manual goalsetting. Currently, for manual goalsetting the amount or number of labels or amount of time is monitored, i.e., it is counted how many labels a certain user assigns to the data entities during a certain amount of time. Furthermore, the quality of the labels provided by a certain user may be evaluated and supervised by a supervisor, wherein the labels and data entities are individually supervised or wherein the labels are statistically analyzed. This results in a high manual effort with the purpose of eliminating errors and aligning users to specific behaviour, when labeling the data entities for the training set.

### Summary

There is a demand to improve manufacturing of products based on classification by a classification model and, accordingly, to facilitate generating a training set for the training of a classification model for controlling a manufacturing process, and more particularly, for enhancing the quality of a training set, to reduce the manual efforts when generating such a training set, and/or to provide automated technical means to measure the performance of users labeling data entities of such a training set and to optimize the accuracy and/or effectiveness of labeling.

This demand is met by the teaching of each of the independent claims, specifically by a computer implemented method for training a classification model for controlling a manufacturing process, by a method for controlling a manufacturing process based on the classification model, by a controlling apparatus for controlling a manufacturing process based on the classification model, and by a computer-implemented method for generating a smart contract for determining a labeling score. Various embodiments, advantageous modifications and further improvements are provided, in particular, by the teachings of the dependent claims.

A first aspect of the present invention is directed to a computer-implemented method for training a classification model for controlling a manufacturing process. By the manufacturing process products are manufactured according to at least one process parameter, wherein at least one property is indicative of the manufacturing of the products. The computer-implemented method is adapted for generating a training set and for training the classification model and comprises the following. Providing a set of data entities, each of the data entities being indicative of at least one property of a manufacturing of a respective product. The method further comprises acquiring one or more labels for each of the data entities from an agent. The labeling method further comprises determining a set of labeling metrics based on the acquiring of the agent. Moreover, the method comprises training the classification model, wherein the training set comprises the data entities and their respective one or more labels. The method further comprises validating the trained classification model based on predefined criteria and yielding a classifier score. Furthermore, the method comprises training a labeling score model based on the data entities, the respective one or more labels, the sets of labeling metrics and the classifier score. Moreover, the method comprises determining a labeling score for the agent based on the labeling score model and the respective one or more labels and the set of labeling metrics.

In the sense of the present invention, a "classification model" at least refers to a model for classifying data entities by means of machine learning or artificial intelligence. By classifying a data entity, one or more labels are yielded by the classification model, whereby the labels define the category of their classified data entity. Such a classification model may be implemented by an artificial neuronal network or a support vector machine, which is trained by a training set. In the sense of the present invention a "training of the classification model" at least refers to an optimization of the classification model, whereby deviations of the labels provided by the training set for a certain data entity or, in particular, for all data entities from their respective labels yielded by the classification model, when classifying the respective data entity, are minimized. A "classifier score" in the sense of the present invention may at least refer to a measure of how well the classification model validates, when the trained classification model is validated, and/or fits with the training set or a validation set. Such a measure may be implemented as a numerical variable, wherein a higher value of the variable indicates that the trained classification model provides a better classification than another, e.g. previous classification model. Moreover, a high value may indicate that, when the trained classification model classifies - i.e. in particular assigns labels to - data entities of the training set or the validation set, the deviations from the classes/labels according to the training set or validation set are small. Moreover, a high value may indicate that, during training or at least at the end of training, the classification model has a high convergence for the training set - i.e. in particular erroneously and/or contradictory assigned labels may result in a worsened convergence as it is not possible to fit for both, correct and wrong/contradictory assigned labels. It is to be understood, that another dependency between a numerical value for the classifier score and the validation or fitting of the classification model may be used: i.e. in some implementations, a numerical value that is the inverse of the previous numerical value might be used, whereby a lower value indicates a better performance of the classification model with regard to validation or fitting with the training or validation set.

Likewise, in the sense of the present invention, a "labeling score model" at least refers to a model based on machine learning or artificial intelligence. According to some advantageous modifications such a model, in particular the labeling score model, may be implemented as a reasoning engine. A "labeling score" in the sense of the present invention may at least refer to a measure of how well an agent performed, when labeling the data entities. Such a measure may quantify a quality of the labels acquired from an agent for the data entities. Moreover, such a measure may quantify a quality and/or effectiveness and/or efficiency of a labeling performed by an agent, when assigning labels to the data entities. Such a quality / effectiveness / efficiency of labeling work may correspond with the labeling metrics. Furthermore, the labeling score may be a numerical variable, wherein a high value indicates a high quality of the label acquired from an agent and/or a high performance of the agent, when labeling the data set. It is to be understood, that another dependency between a numerical value for the labeling score and labels or labeling work may be used: i.e. in some implementations, a numerical value that is the inverse of the previous numerical value might be used, wherein a high labeling score indicates a low quality of the labels - such as many incorrectly assigned labels - or a low performance - such as a low number of labels per time.

An advantage of training the classification model in combination with training the labeling score model may particularly be that additional data such as the sets of labeling metrics and the classifier score is taken into account for scoring a quality and/or accuracy of the labeling of the data entities and, thus, in particular, the quality and/or accuracy of the training set, whereby the data quality of the training set can be improved and - in particular by separation - the complexity for training the classification model can be reduced. Moreover, determining a labeling score based on the labeling score model advantageously allows to give continued automated feedback by technical means to the respective agent, and thus, a feedback loop of enhanced labeling scores and training sets with increased data quality can be established. Consequently, this allows reducing manual interaction and supervision, whereby accuracy and consistency of the training set or further training sets generated by the method may be enhanced in relation to a time span as well as in relation to multiple agents or groups of agents. Moreover, an advantage of determining a labeling score based on the labeling score model may particularly be, that labeling scales for a huge amount of agents, in particular due to reducing manual interaction and supervision, i.e. many agents can label the data entities, whereby the quality of the training set may be further enhanced. An advantage of the classification model, which has been trained with the training set of higher data quality, may particularly be, that classifying based on this classification model is more accurate, and consequently products manufactured by the manufacturing process controlled by the classifying have a higher quality or deviate less from predefined - and in particular beneficial/wanted - classes/categories of the product and/or the yield of the manufacturing process may be increased.

According to some embodiments, the training of the labeling score model and a target function thereof is based on limiting the respective labeling score for each of the agents to a predetermined value and/or based on the minimization of the maximally achievable labeling score, wherein the labeling score is determined by the labeling score model relative to the classifier score. In some advantageous modifications of some of these embodiments, a higher labeling score indicates a higher quality and/or performance of the labeling of the respective agent. In some advantageous modifications, a higher classifier score indicates a better performance of the classification model - e.g. when the classification model is validated -, wherein - in particular - the performance depends on the training of the classification model and, thus, on the quality of the training set, i.e., a training set of a higher quality and/or accuracy will allow a better performance.

Correspondingly, in other embodiments, in which a lower labeling score and/or a lower classifier score indicates a higher quality, the labeling score model is trained such that, when determining the labeling score for the agent or respective labeling scores for the agents, the labeling score(s) is/are above a predetermined threshold and/or is/are maximized relative to the classifier score.

In some advantageous modifications, the relation of the labeling score and the classifier score is the difference between the labeling score and the classifier score. Alternatively, in some advantageous modifications, the relation of the labeling score and the classifier score is a fraction of the labeling score to the classifier score. In some implementations, the target function for training the labeling score model may be based on a synthetic labeling score - such as an average labeling score that is the average of the labeling scores of all agents. Alternatively, in some implementations, wherein a labeling score is determined for each one of multiple agents, a combination of the data entities, the acquired labels and the labeling metrics for each one of the agents may be a member of a set for training the labeling score model, wherein each of the resulting labeling scores is optimized, e.g. minimized.

An advantage of optimizing the labeling score relative to the classifier score, when training the labeling score model, may particularly be that rewarding labeling scores which are too high or too low in relation to the labels and the set of labeling metrics may be avoided, and hence, the labeling score is an effective measure of the quality of the labeling. Consequently, in some advantageous modifications, this enables to use the labeling score - in particular iteratively - to increase the quality of the labels of a particular/respective agent.

According to some embodiments, the method for training the classification model comprises a labeling method for generating the training set and comprises a validation method for training the classification model. According to some further embodiments, the labeling method comprises at least acquiring the labels, determining the set of labeling metrics, and determining the labeling score. According to some further embodiments, the validation method at least comprises training to classification model, validating the trained classification model, and training the labeling score model.

According to some embodiments, validating the trained classification model comprises or consists of one of the following performance evaluations or a combination thereof:
- comparing the performance of the trained classification model against a previously trained classification model, in particular based on a validation set;
- determining how many labels determined by the trained classification model for data entities from the validation set match with the labels assigned to the respective data entities according to the validation set;
- determining the amount of correct labels/classifications by the trained classification model;
- determining how well the classification model converged by training with the training set; and/or
- cross validating the labels yielded by the trained classification model when a data entities is applied to it with labels assigned by users.

By validating the trained classification model the classifier score is determined - and thus yielded - based on the performance evaluations, i.e. the classifier score may be based on a relative performance of the trained classification model against a previous classification model, the number of labels, and/or the number of correct classifications. In some modifications, the validation set is based on the training set - such as a sub set of the training set. Alternatively, the validation set is a separate set, which may in some advantageous implementations, be based on actual outcomes of the manufacturing process and respective data entities.

According to some embodiments, the manufacturing process is a process for additive manufacturing. In some embodiments, in which the manufacturing process is a process for additive manufacturing, wherein products are manufactured by connecting layers of powder within a powder bed, each of the data entities comprises an image of a powder layer of a powder bed for manufacturing a layer of the respective product. In some advantageous modifications, the at least one property is a distribution of powder of the respective powder layer. Moreover, in some advantageous further modifications, the at least one property is a homogeneity of powder of the respective powder layer. An advantage of classifying the images of powder layers of respective products in terms of the distribution of the powder - and in particular controlling the process accordingly - may particularly be that an inhomogeneous distribution of the powder of a powder layer can be detected by the classification, so that a manufacturing step of applying the respective powder layer can be repeated and/or a product with an insufficient homogeneity of the powder layer - i.e., which was manufactured out of at least one inhomogeneous powder layer - can be removed from the manufacturing process. This advantageously allows to increase the yield and/or to improve the quality of the products, which have not been removed from the manufacturing process. Likewise, other defects of the powder layers may be detected and used for classification and control of the manufacturing process. An advantage of the automated feedback for generating the training set and the classifying in combination with the additive manufacturing process may particularly be that several defects are known and accurately and/or reliably classifiable by the trained classification model, whereas new/special defects may arise which require manual interaction and/or additional training, whereby due to the feedback loop, the additional training or manual interaction may be focused on those new/special defects.

In some advantageous modifications, defects, for which the trained classification model may be used, may particularly be one or more of the following group:
- Missing powder on a part of a product: hence, powder spreading is incomplete on the part of the product, i.e., the powder does not cover all the previous parts, in particular, layers of the product;
- Missing powder within an area, which is not part of a product: hence, powder spreading is incomplete beyond the respective product or part of the product, i.e. in particular, outside an exposed area, for example, missing in a corner of the powder bed;

- Vertical line: hence, one or more vertical lines are present in the layer of powder in the powder bed - this may be the result of failures during application of the layer of powder, i.e., when the powder is distributed within the powder bed for the respective powder layer;
- Elevated area: Parts of the product, in particular, previous layers of the product are protruding through the powder - this may be indicated within the respective images by pixels of high intensity that are located within a small area;
- Horizontal line: Like vertical line; moreover horizontal lines may be caused by parts of a product moved through the powder bed by a recoater blade of an additive manufacturing apparatus;
- Condensate/soot: This may be visible/detectable, in particular, by a dark area within the layer of powder and may particularly be a contamination of the powder;
- Compressed area: hence, the powder of the layer is compressed, which may appear and thus be detectable as dark spots or shadows, wherein areas of the powder layer typically are larger than 1 mm² and may extend to the whole powder bed or at least half of the powder bed, wherein the pixels of the image have a low intensity;
- Collapsed area: hence, dark holes appear in the powder bed, which may indicate a collapsed structure of a part of a product made with a previous layer;
- Normal: hence, the image and, in particular, the distribution of the powder in the layer appears to be normal; and
- Other/new/special defects: hence, the respective image of the powder layer deviates from a normal image of the powder layer more than a predetermined amount.

In some advantageous modifications, each of the data entities comprises a series of images of, in particular consecutive, powder layers. Thereby, these images can be classified in view of each other, such that, in particular, changes over multiple consecutive powder layers may be tracked and used for classification. So, in some modifications, a specific changes of images of the series may indicate a defect a manufactured product.

In some embodiments, in which the manufacturing process is an additive manufacturing process, the products are manufactured out of a metal powder, in particular, by melting layers of metal powder onto previous layers of metal powder.

In some advantageous modifications, the defect categories given above are (also) used as labels for the data entities.

According to some embodiments, one or more, in particular all, of the data entities each comprise one of a group comprising: an image, a video, a material density, a sound recording, and a concentration of a chemical substance; or comprise a combination thereof.

According to some embodiments, the set of labeling metrics comprises one of the following group or a combination thereof: a time span during which the one or more labels for the respective data entity or for all data entities have been acquired from a particular agent; a time span between acquiring one label and a further label from a particular user and - in particular, for a particular label for one of the data entities; an amount of energy required by an agent or group in particular in total, per label or per data entity, in particular electrical energy; an effort for labeling a data entity, wherein in particular the effort may depend/be based on a level of detail of the provided labels or a level of detail of the data entity such as a data entity with multiple parts of different classes e.g. failures; an importance score for a data entity, wherein in the sense of active learning such data entities have a higher importance score and thus will result in a higher labeling score that have been labelled less often and/or whose labels have a high influence on training the classification model; a count of labels for a particular data entity; a count of labels for a particular set of data entities, in particular, the set of data entities; a count of labels acquired from a particular group of agents, in particular the group to which the agent is assigned; a count of labels acquired from a particular agent; a measure of the similarity between labels across a particular group of agents, in particular the group to which the agent is assigned; a measure of similarity of labels across multiple/different groups of agents; assigning a new or at least less frequent label to a particular data entity; and an agent classification score. In some advantageous modifications, the measure of similarity of labels across a particular group of agents is the number of labels that are equal for one, more or all of the data entities between two or more agents of the particular group of agents. Likewise, in some advantageous modifications, the measure of similarity of labels across different groups is the count of labels that have been assigned to a data entity by agents of different groups, in particular, the total count of such labels over all data entities. In some advantageous modifications, the agent score is a number, which rates the quality of labeling of the data entities of another agent. Alternatively, in some advantageous modifications, the agent classification score is a free text comment regarding the quality of the labeling of an agent from another agent. In some further modifications, such a free text comment may be analyzed by an artificial intelligence to yield a scoring number, i.e., in particular, a numerical parameter. Moreover, in some advantageous modifications, when determining the labeling score the metric of similar labels across a group of agents may be given a lower weight compared to other metrics. Moreover, in some advantageous modifications, the metric of similar labels across multiple groups may be given a lower weight compared to other metrics - in particular with regard to a particular data entity -, when this particular data entity or some of the data entities have been assigned with similar or equal labels across the majority of groups. The set of labeling metrics advantageously allows monitoring data regarding the labeling of the data entities beyond the labels assigned to the data entities, on which the quality, accuracy and/or performance of the labeling depends. In particular, while the time span required for labeling a particular data entity or all data entities may not be part of the training set for training the classification model, yet is relevant for the performance of labeling and may also be relevant for the quality of the labeling i.e., in particular, a shorter time span required for labeling may indicate a higher performance until a predetermined or trained value for the time span is underrun, which may indicate a potentially lower accuracy.

According to some embodiments, the method and/or at least the acquiring of the labels, the determining of the set of labeling metrics and the labeling score as well as the training of the classification model and the labeling score model are iteratively performed with a first and one or more further iterations, wherein in the further iterations the labeling score is determined based on the labeling score model of a respective previous iteration. In some advantageous modifications, the labeling score in the first iteration is determined based on a predetermined labeling score model. Alternatively, in some advantageous modifications, the determining of the labeling score is skipped in the first iteration. Moreover, in some advantageous modifications, the first iteration is performed based on a first set of data entities being the set of data entities, while one or more of the further iterations are performed based on one or more further sets of data entities, wherein - in particular - within these further iterations respective further sets of data entities, each of the data entities being indicative of at least one property of a manufacturing of a respective product - i.e., of further product runs of the manufacturing process -, are provided in the respective iteration of the labeling method. This may advantageously allow a higher classifier score of the classification model, and thus a better classification model, whereby classification of the manufacturing of the products may be improved, such that the quality of the manufactured products and/or the yield of the manufacturing process is increased.

According to some embodiments, the data entities of the set, the first set or of a further set are prefiltered before acquiring one or more labels for them. In some advantageous modifications, the prefiltering is performed by a manual filtering - e.g. based on predefined criteria such as an importance score (e.g. only data entities will be labelled whose importance score is above a specific threshold such that the labels assigned to these data sets influence the training of the classification model more than the other data entities e.g. active learning) or a specific class data entities e.g. data entities previously labelled as manufacturing failures. Alternatively, in some advantageous modifications, the prefiltering is performed by a statistical tool. Alternatively, in some advantageous modifications, the prefiltering is performed by a predetermined classification model.

In some embodiments, in which the method is iteratively performed, the data entities of the first set or of a further set are prefiltered - in particular, in the further iterations - by the classification model, which has been trained in the respective previous iteration.

In some embodiments, in which the data entities are prefiltered, the prefiltering is performed by a predetermined classification model or a classification model trained by a previous iteration, wherein such data entities are removed from the data entities for which labels are to be acquired from the agents that are classified by the classification model with a low error and/or a high classifier score - i.e., in particular, data entities are filtered out which can be classified by the classification model with high accuracy and/or certainty. This may advantageously allow focusing the acquiring of labels on data entities for which the classification model requires additional training data. Thereby, the quality and/or the accuracy of the training set and/or the performance of the labeling may advantageously be increased.

In some embodiments, in which the data entities are prefiltered and in which labels from at least two agents of different groups are acquired, some of the agents or some of the groups may choose an individual prefilter such as a trained classification model and/or a statistical tool.

In some embodiments, in which the training - in particular the validation method - is iteratively performed, the classification model and/or the labeling score model are newly initialized and trained solely on the training set or, respectively, the labeling metrics etc. of the current iteration. Alternatively, in other embodiments, the classification model or the labeling score model is initialized in a first iteration - in particular as a predetermined classification/labeling score model or by random numbers - and is continuously trained in the further iterations. Starting with a new classification model or labeling score model for each iteration may provide the benefit of avoiding continued errors, which may have been introduced in an initial training set. Continuous training of the classification/labeling score model may provide the benefit of reducing the required amount of data for the training set per iteration and/or may allow continuously training the respective model with multiple sets of data entities, in particular, a first set and one or more further sets.

According to some embodiments, the method for training the classification model further comprises a labeling method for generating the training set and a validation method for training the classification model. Furthermore, the labeling method at least comprises the acquiring of the labels, the determining of the labeling metrics, and the determining of the labeling score. Furthermore, the validation method at least comprises the training of the classification model, the validation of the classification model, and the training of the labeling score model. Additionally, the labeling method further comprises storing, for each of the data entities or at least for some of the data entities, the one or more labels and the set of labeling metrics in a distributed database. Additionally, the labeling method comprises retrieving the labeling score model from the distributed database. Moreover, the validation method further comprises retrieving the one or more labels, for each of the data entities or at least for some of the data entities, from the distributed database. Additionally, the validation method further comprises storing the trained classification model and/or the labeling score model in the distributed database.

In the sense of the present invention, a "distributed database" is a database that is distributed over a multitude of computational nodes, wherein transactions to the database depend on a consensus between the computational nodes, and wherein the computational nodes may be geographically spread across multiple sites, locations, countries or organizations. Such a consensus may be established by a consensus algorithm, like proof of work, proof of stake, or a voting system. In particular, the distributed database may be implemented as a blockchain.

In some advantageous modifications, the distributed database is a private database that can be accessed only from computational nodes of a particular location, site or organization. Moreover, in some advantageous modifications, other sites or organizations may be granted access to such a private distributed database. This may advantageously allow restricting access to data stored in the private database to the respective organization or site.

An advantage of storing and/or retrieving the labels, the data entities and/or the labeling metrics in the distributed database may particularly be that labels acquired from an agent, enabled data entities and respective metrics are traceable and auditable, whereby transparency of the labeling process may be increased and/or security and/or reliability of acquiring/generating their training set and for scoring the quality of the labeling of particular agents or group of agents may be enhanced.

Moreover, an advantage of the distributed database may particularly be that acquired labels, data entities, labeling metrics, and/or training sets - in particular of previous iterations - are immutably stored, such that, in particular, nobody can delete or change already stored entries into the distributed database. However, in some advantageous modifications, previous entries such as labels, labeling metrics, data entities, classification models and labeling score models of previous iterations are invalidated, when a new iteration is started or finished. Thereby reliability and/or quality of the classification model may be enhanced and a particular classification of a particular data entity can be traced down to a specific set of training data. This may advantageously allow to trace down particular defects on manufacturing runs to a particular classification or set of data entities and/or respective labels.

According to some embodiments, in particular such embodiments, which store and/or retrieve data from a distributed database, the agent is a first agent of a first group of agents. Moreover, the labeling method further comprises acquiring one or more labels for each of the data entities from a second agent of a second group of agents. Alternatively, one or more labels may be acquired only for some of the data entities from a second agent or a second group of agents. The labeling method further comprises determining a set of labeling metrics based on the acquiring from the second agent. The labeling method further comprises storing for each of the data entities or at least for some of the data entities and for each or at least for some of the agents, the one or more labels and the set of labeling metrics, in particular, in a distributed database. Furthermore, the labeling method further comprises determining a labeling score for each (or at least for some) of the agents based on the labeling score model and the respective one or more labels and a set of labeling metrics. Moreover, the validation method further comprises retrieving that one or more labels for each or at least for some of the data entities and for each or at least for some of the agents, in particular, from the distributed database. An advantage of multiple agents or - in particular - multiple groups of agents may particularly be that the performance and/or the labeling of the different agents can be compared, whereby the quality of the training set may be increased. Moreover, in some advantageous modifications, the different agents may improve their labeling by comparison to the labeling of the other agents.

In some embodiments, in which the labels or the set of labeling metrics is stored in a distributed database, the labeling score for each agent is stored in the distributed database.

In some embodiments, in which labels are acquired from a second agent of a second group of agents, the labeling score for an agent of one of the groups of agents, the respective set of metrics and the one or more labels of one of the data entities acquired from this agent are provided to this agent or to a further agent of the respective group of agents. This may beneficially allow improving the coherency of the labeling within a group of agents. According to some advantageous modifications, the labeling score, the respective set of metrics and/or the labels are not provided to agents of another group of agents, while labels are still acquired from the other group of agents.

In some embodiments, in which labels are acquired from a second agent of a second group of agents, the labeling score for an agent of one of the groups of agents, the respective set of metrics and the one or more labels of one of the data entities acquired from this agent are provided to an agent of another group of the groups of agents depending on whether, during a current iteration of the labeling method, labels for the data entities may still be acquired from the other group. In particular, the labeling score, the respective set of metrics and the labels may be provided only to the agent of the other group if the acquiring of the labels is finished - at least for the current iteration - for the other group. An advantage of providing the labeling score, the set of metrics and the labels to the other agent - i.e., to the agent of the other group - may particularly be that the other agent may compare the labeling of the agent of one of two groups of agents with their own labeling and metrics. An advantage of providing the labels etc. only after the labeling is finished may particularly be that the different groups may conduct the labeling independent from each other - at least for the respective iteration.

In some embodiments, in which labels are acquired from a second agent of a second group of agents, after acquiring labels during a current iteration of the labeling method has been finished, all labeling scores, sets of metrics and all one or more labels of one of the data entities - in particular of all data entities - are provided to all agents. This may advantageously allowed comparing the labeling and/or the labeling performance between the groups and agents, such that for a further iteration deviations of the labeling may be reduced, and thus the quality of the training set may be enhanced.

In some embodiments, in which labels are acquired from a second agent, the labeling method further comprises acquiring at least from the first agent, after determining the labeling score at least for the first and the second agent, an agent classification score with respect to the labels for one or more of the data entities, wherein the labels have been acquired from the second agent. Furthermore, the labeling method comprises acquiring at least from the first agent, after determining the labeling score at least for the first and for the second agent, an agent labeling score with respect to the labeling score and the set of labeling metrics of the second agent. Likewise, an agent classification score and/or an agent labeling score may be acquired from the second or further agents - in particular from agents of other groups of agents, than the agent with respect to which the agent classification score or the agent labeling score is acquired - in some advantageous modifications. Moreover, the training set for training the classification model further comprises the agent classification score and/or the training of the labeling score model is further based on the agent classification score and/or the agent labeling score.

An advantage of optimizing the labeling score relative to the classifier score by the training of the labeling score model, the determining of the labeling score based on the labeling score model, the training of the classification model and/or the labeling score model that is also based on the agent classification score or the agent labeling score and, in particular, of a combination of these features, may particularly be that in this way a closed feedback loop is established between the labeling method and the validation method. So, during the labeling - in particular, over multiple iterations of the labeling method and/or the validation method - a closed feedback loop is established, whereby the quality of the training set - in particular of further iterations - is continuously enhanced. Moreover, prefiltering may synergistically be combined with the closed feedback loop, whereby data entities, which have a predetermined certainty level for classification, are filtered out and further iterations are focused on such data entities, which require further/more accurate labeling and/or manual labeling/classification.

According to some embodiments, for each or at least for some of the data entities, the one or more labels and the set of labeling metrics of the first agent or of a further agent are encrypted by a public key and are stored in encrypted form in a data storage such as a blockchain or distributed ledger, wherein a corresponding private key is known to the first group of agents, a further group of agents or a labeling system, respectively. Moreover, after acquiring labels during a current iteration of the labeling method has been finished, the encrypted form is retrieved from the data storage and is decrypted. This advantageously allows providing the labels and the set of labeling metrics to the respective group of agents - i.e., in particular, to the first group of agents - during the current iteration, whereas agents of other groups only have access to the labels and labeling metrics after the current iteration is finished - i.e., after acquiring of the labels within this iteration is finished. Accordingly, in some advantageous modifications, the private key may be known to a labeling system. Moreover, each of the first group of agents, the further group of agents and/or the labeling system may each know an individual private key for decrypting the labels and/or labeling metrics. Moreover, in some implementations, the labeling system may comprise some or all keys or a master key for decrypting the data of all agents. Thereby, the agents of different groups of agents may act independently during the current iteration, while for further iterations the labeling may be adapted to each other, whereby the quality of the training set may continuously be increased over one or more iterations.

A second aspect of the invention is directed to a method for controlling a manufacturing process, wherein products are manufactured according to at least one process parameter and wherein at least one property is indicative of the manufacturing of the products. The method comprises acquiring a data entity, the data entity being indicative of at least one property of a manufacturing of a respective product. The method further comprises classifying the manufacturing of the product based on the data entity and a classification model. Furthermore, the method comprises adapting the at least one process parameter based on the classifying. According to some embodiments, the classification model is training by a method according to the first aspect of the invention. Additionally or alternatively, the classification model is training by a computer-implemented method comprising a labeling method and a validation method, wherein the labeling method comprises providing a first set of data entities, each of the data entities being indicative of at least one property of a manufacturing of a respective product. Furthermore, the labeling method comprises acquiring one or more labels for each of the data entities from a first agent of a first group of agents. Furthermore, the labeling method comprises determining a set of labeling metrics based on the acquiring of the first agent. Furthermore, the labeling method comprises determining a labeling score for the first agent based on a labeling score model and the respective one or more labels and a set of labeling metrics. Moreover, the validation method comprises training the classification model, wherein a training set for the training comprises the data entities and their respective one or more labels. The validation method further comprises validating the trained classification model based on predefined criteria and yielding a classifier score. Furthermore, the validation method comprises training the labeling score model based on the data entities, their respective one or more labels, the sets of labeling metrics and the classifier score.

The embodiments, advantageous modifications and further improvements as already described in detail above in connection with the first aspect of the invention as well as potential benefits and advantages also apply correspondingly to the method for controlling the manufacturing process according to the invention.

According to some embodiments, the validating of the trained classification model is based on a predefined set of data entities and respective labels, in particular a validation set, wherein the predefined criteria are one or more of the group comprising: a level of convergence, a number of correctly classified data entities, a number of incorrectly classified data entities, and/or another parameter characterizing the performance of the classification model such as a result of at least one of the performance evaluations.

In some advantageous modifications, a supervisor - in particular, a human user - is provided with an interface for fine-tuning one or more parameters of the trained classification model, wherein an input of the supervisor is received and depending on the input, one or more parameters of the trained classification model are changed in accordance with the input.

In some advantageous modifications, a supervisor - in particular, a further artificial intelligence based classification model - is additionally trained with and/or additionally uses manufacturing data acquired from the manufacturing process for fine-tuning one or more parameters of the trained classification model. In some further modifications, the manufacturing data indicates damages such as damaged products, a yield of the manufacturing process and/or deviations of the classification by the classification model and an actual outcome for the respective manufactured product. For example, based on the classification model it might be assumed that the product has been manufactured correctly, while in the real manufacturing process the manufactured product is damaged. Thereby, in particular, the classification model may be improved further and/or the yield of the manufacturing process may be increased. Additionally or alternatively, the at least one property may consist of or comprise properties of the final product such as whether the manufactured product is/was - in fact - damaged.

Likewise, in some embodiments, the trained labeling score model is validated.

A third aspect of the invention is directed to a controlling apparatus for controlling a manufacturing process, wherein products are manufactured by a manufacturing system according to at least one process parameter and wherein at least one property as indicative of the manufacturing of the products. The controlling apparatus comprises a sensor assembly adapted to acquire a data entity, the data entity being indicative of at least one property of a manufacturing of a respective product. The controlling apparatus further comprises a data processing apparatus adapted to classify the manufacturing of the product based on the data entity and a classification model. Furthermore, the controlling apparatus comprises a control interface adapted to output a control signal such that the at least one process parameter is adapted - in particular, changed - based on the classifying. Moreover, the data processing apparatus is further adapted to receive the classification model from a data storage of the controlling apparatus, and to which the classification model is stored, or from a distributed database. According to some embodiments, the classification model has been training by a computer-implemented method for training a classification model according to the first aspect of the invention. Moreover, according to some embodiments, the data processing apparatus is further adapted to perform the method for training the classification model. Additionally or alternatively, the method for training the classification model comprises a labeling method and a validation method. According to some embodiments, the labeling method and/or the validation method is according to the first aspect of the invention. According to some embodiments, the labeling method comprises providing a first set of data entities, acquiring one or more labels, determining a set of labeling metrics, and determining a labeling score. Each or at least some of the data entities may be indicative of at least one property of a manufacturing of a respective product. Furthermore, the labels may be acquired for each or at least for some of the data entities from a first agent of a first group of agents. Furthermore, the set of labeling metrics may be based on the acquiring from the first agent. Furthermore, the determining of the labeling score may be based on a labeling score model and the respective labels and a set of labeling metrics and may be with respect to the first agent. Moreover, the validation method may comprise, in some embodiments, training the classification model, wherein a training set for the training comprises the data entities and respective labels or at least a predetermined or random selection of data entities and labels. Furthermore, the validation method may comprise validating the trained classification model based on predefined criteria and yielding a classifier score. Finally, the validation method may comprise training the labeling score model based on the data entities, their respective labels, the sets of labeling metrics and the classifier score or at least based on some of the data entities and respective labels.

The embodiments, advantageous modifications and further improvements as already described above in detail in connection with the preceding aspects of the invention as well as potential benefits and advantages also apply correspondingly to the controlling apparatus according to the invention.

A fourth aspect of the invention is directed to a computer-implemented method for generating a smart contract for determining a labeling score. The method comprises training a labeling score model based on data entities, at least one label for each data entity and at least one set of labeling metrics, wherein the at least one labeling metrics is indicative of an acquiring of the label for the respective data entity. The method further comprises storing, after training, the labeling score model in a distributed database. The method further comprises generating a smart contract that comprises a method for determining a labeling score. The method of the smart contract at least comprises applying a set of labeling metrics, which are indicative of an acquiring of labels from an agent, to the trained labeling score model, whereby the labeling score model is performed and yields, depending on the labeling metrics of the agent, a labeling score. Finally, the method for generating the smart contract comprises storing the smart contract in the distributed database.

The embodiments, advantageous modifications and further improvements as already described above in detail in connection with the preceding aspects of the invention as well as potential benefits and advantages apply correspondingly to the method for generating a smart contract according to the invention.

According to some embodiments, the generated smart contract is performed to determine a labeling score. Thereby, in particular, labeling scores for one or more agents, from whom labels are acquired - e.g. within a labeling method - may be determined in an auditable and traceable manner. This may enhance mutual trust between multiple agents or groups of agents.

According to some embodiments, the labeling score is a reward, in particular, in the sense of reinforcement learning. Thereby, artificial intelligence based agents may be trained to improve their labeling based on the labeling score. Moreover, in some further modifications, the reward may be transformed, i.e. via a transaction on a distributed ledger such as a distributed database, into a digital asset such as a crypto currency like bitcoin, whereby human users performing as agents may be motivated and/or whereby artificial intelligence based agents may be controlled - in particular in an evolutionary manner such as a genetic algorithm.

According to some embodiments, the labeling score model is directly stored in the distributed database, wherein data being indicative of the labeling score model - such as weights of an artificial neural network - is written into a block of the distributed database. Alternatively, in some embodiments, the labeling score model is indirectly stored in the distributed database, wherein data being indicative of the labeling score model is written to another storage system such as a file server and a reference to the written data is written into a block of the distributed database. In some advantageous implementations, the reference comprises a check sum of the written data, whereby an integrity of the written data of the labeling score model may be checked, when retrieving it from the other storage system. Likewise, other data - being indicative of e.g. a classification model, a labeling score or a set of labeling metrics - may, in some implantations, be stored in the distributed database.

According to some embodiments, the method for generating a smart contract or parts thereof are used to implement respective functionalities of embodiments of the first aspect of the invention - such as training the labeling score model and/or storing the trained labeling score model. Moreover, in some embodiments, the smart contract is performed in the method according the first aspect of the invention for determining the labeling score. Moreover, in some implementations of the fourth aspect of the invention, a classifier score is provided for training the labeling score model additionally based on the provided classifier score. Moreover, in some modifications of the first aspect of the invention, the labeling score model is trained at least not directly depending on the classifier score. In such modification a relation to the classifier score may be achieved, because the data entities and the labels used for training the classification model are also used - besides e.g. the labeling metrics - for training the labeling score model. In this advantageous way, the training of the labeling score model of the first and the fourth aspect of the invention relate to each other and, furthermore, the smart contract relates to the determining of the labeling score, whereby manual interaction and supervision may be reduced and/or consistency, traceability and/or auditability of the determined labeling scores for respective agents may be enhanced.

The above summary is merely intended to give a short overview over some features of some embodiments and implementations and is not to be construed as limiting. Other embodiments may comprise other features than the ones explained above.

### Brief description of the drawings

The above and other embodiments, advantageous modifications, further improvements, elements, features, steps and characteristics of the present disclosure will be more apparent from the following detailed description of exemplary embodiments and the appended figures. When not stated otherwise or following otherwise from the context, like reference signs referred to corresponding apparatuses, elements or features of the exemplary embodiments and throughout the figures.
- Fig. 1: schematically illustrates a manufacturing system for additive manufacturing comprising an additive manufacturing apparatus as well as a controlling apparatus according to an embodiment.
- Fig. 2: represents a flowchart of a method for training a classification model for controlling a manufacturing process according to an embodiment.
- Fig. 3: represents a flowchart of a method for controlling a manufacturing process according to an embodiment.
- Fig. 4: represents a flowchart of a labeling method for generating a training set according to an embodiment.
- Fig. 5: represents a flowchart of a validation method for training a classification model according to an embodiment.
- Fig. 6: represents a flowchart of a method for generating artificial intelligence-based labeling agents as a further modification of a validation method according to an embodiment.
- Fig. 7: represents a flowchart of a method for generating a smart contract as a further modification of a validation method according to an embodiment.
- Fig. 8: represents a flowchart of a method implementing a smart contract for determining a labeling score according to an embodiment.

### Detailed description of exemplary embodiments

In the following, various embodiments of the invention will be described in detail with reference to the appended figures. It is to be understood that the following description of embodiments is not to be taken in a limiting sense. The scope of the invention is not intended to be limited by the embodiments described hereinafter or by figures, which are taken to be illustrative only.

The figures are to be regarded as being schematic representations and elements illustrated in the figures, which are not necessarily shown to scale. Rather, the various elements are represented such that their function and their general purpose become apparent to a person skilled in the art. Any connection or coupling between functional blocks, devices, components or other physical or functional units shown in the figures or described herein may also be implemented as an indirect connection or coupling. A coupling between components may be established over a wireless connection. Functional blocks may be implemented in hardware, firmware, software or a combination thereof.

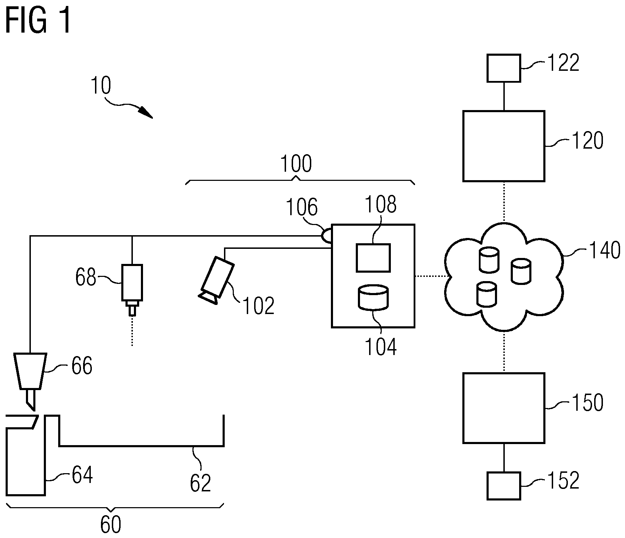

Fig. 1 schematically illustrates a manufacturing system 10 for additive manufacturing comprising an additive manufacturing apparatus 60, a controlling apparatus 100, a labeling system 120, a validation system 150, and a distributed database 140; the controlling apparatus 100, the labeling system 120 and the validation system 150, their combination with the distributed database 140 and/or some or all of the further illustrated parts of the manufacturing system 10 each according to an embodiment of the invention.

In an exemplary embodiment, the distributed database 140 is implemented as a joint distributed infrastructure network including multiple infrastructure nodes (e.g. blockchain full nodes). According to an advantageous modification, the distributed database may be implemented as a blockchain supporting smart contracts like Ethereum. Furthermore, according to an advantageous modification, the multiple infrastructure nodes are private nodes in a private network, wherein access to the private nodes is restricted to the private network and/or to external organizations that have access to the private network.

In an exemplary embodiment, the additive manufacturing apparatus 60 comprises a powder bed 62 for metal powder, a storage container 64 for metal powder, and a recoater blade with an actuator 66, and a laser device 68. With the additive manufacturing apparatus 60 products may be manufactured by moving, by means of the recoater blade 66, metal powder from the storage container 64 into the powder bed 62, thereby creating a powder layer within the powder bed, and melting the metal powder of the powder layer by means of the laser device 68, such that such areas of the powder layer are connected that are part of the corresponding product or products to be manufactured. For manufacturing the whole product or products, this manufacturing process may be repeated for several consecutive layers. For some advantageous modifications of this manufacturing process, a property indicative of the manufacturing of the products is the homogeneity of the powder layer. For example, for a high quality of products a high homogeneity of the powder layer is required, wherein deviations in the distribution of the powder layer or one of the consecutive powder layers would result in deformations, instabilities, and/or missing parts of the manufactured products and/or maybe this result of a failure during melting or distributing powder for a previous layer. Also, according to some advantageous modifications of this manufacturing process and the respective additive manufacturing apparatus 60, a process parameter is the repetition of distributing metal powder for one of the powder layers, whereby in homogeneities of the respective powder layer may be reduced or removed. Moreover, the process parameter or a further process parameter according to some advantageous modifications, is a selection of one or more products manufactured during the manufacturing process, wherein one or more powder layers had an inhomogeneity within an area for the respective product or products, whereby these products, which might have missing or defective parts, can be removed from the further production chain.

In an exemplary embodiment, the controlling apparatus 100 comprises a sensor assembly 102, a data processing apparatus 108, and a control interface 106. Furthermore, in some advantageous modifications, the controlling apparatus 100 comprises a data storage 104 for storing a classification model. Alternatively or additionally, the data processing apparatus 108 is adapted to retrieve the classification model from the distributed database 140.

The sensor assembly 102 is adapted to acquire a data entity, wherein the data entity is indicative of the homogeneity of a current powder layer within the powder bed 62. In some advantageous modifications, the sensor assembly 102 is an image capturing device directed to the powder bed 62, such that images of consecutive layers of powder can be captured.

The data processing apparatus 108 is adapted to classify the manufacturing of the product based on the data entity and the classification model. So, in some advantageous modifications, the data processing apparatus 108 is adapted to capture an image of the current powder layer by means of the image capturing device such as a camera 102 and classifies the currently created powder layer with regard to the homogeneity of the powder layer by the classification model. Moreover, the data processing apparatus 108 is adapted to output by means of the control interface 106 a control signal such that the homogeneity of the current powder layer is changed on the classifying. In some advantageous modifications, the data processing apparatus 108 is adapted to trigger the actuator of the recoater blade 66 and - in some further modifications - also the storage container 64, such that new metal powder is distributed within the powder bed 62 as the current powder layer to ensure sufficient homogeneity of the powder layer.

In an exemplary embodiment, the labeling system 120 comprises or is connected to a user interface 122 and is adapted to perform a labeling method, wherein labels are acquired via the user interface 122 from a first agent being a human user. Moreover, the labeling system 120 is adapted to store the acquired labels in the distributed database 140.

In an exemplary embodiment, the validation system comprises or is connected to a user interface 152 and is adapted to perform a validation method, wherein the classification model, which is used for classifying the data entity in the manufacturing process carried out by the manufacturing system 10, is trained based on the labels stored in the distributed database 140 and respective data entities for training and wherein the trained classification model is validated and adapted, in particular, if validation fails, by a supervisor, being a human user, via the user interface 152. Moreover, the validation system, in some advantageous modifications, is adapted to store the trained classification model in the distributed database 140.

While the exemplary embodiments are mainly elucidated by an additive manufacturing process using metal powder, some embodiments of the invention can also be carried out with other powders such as plastics or for other manufacturing processes, or more general, for other processes, wherein generating a training set for training a classification model is required.

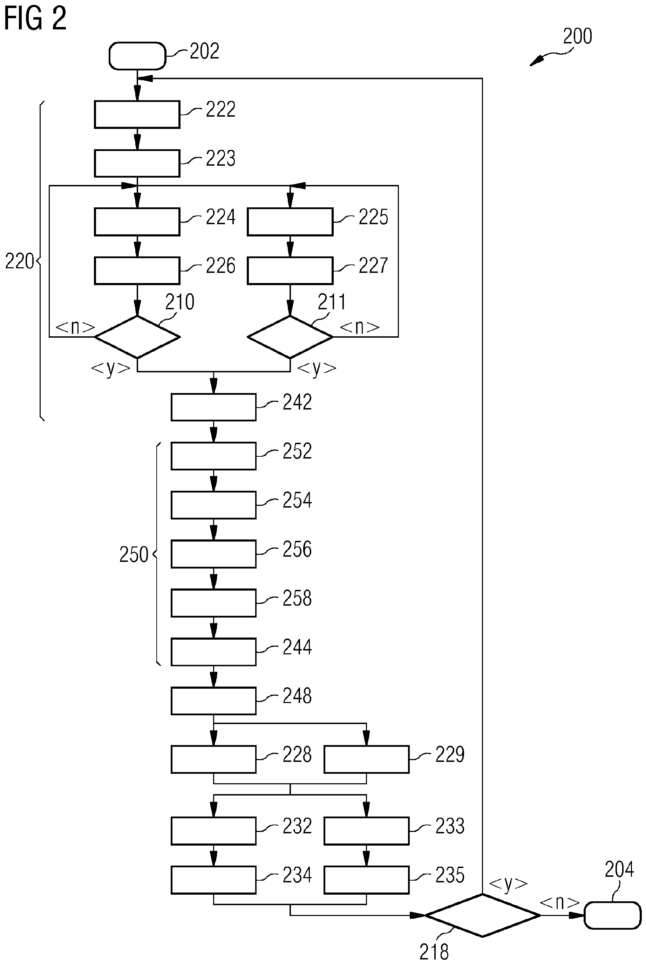

Fig. 2 shows a flowchart of a method 200 for training a classification model for controlling a manufacturing process, the method 200 according to an embodiment of the invention. Moreover, in some advantageous modifications, the manufacturing process and a respective manufacturing system adapted to perform the manufacturing process is according to an embodiment of the invention and, in some further advantageous implementations, is according to figure 1.

In an exemplary embodiment, the method 200 comprises the method conditions 210, 211 and 218, and further comprises the method steps 222, 223, 224, 225, 226, 227, 228, 229, 232, 233, 234, 235, 242, 244, 252, 254, 256 and 258. The method starts at the start of the method 202 and ends at the end of the method 204. Furthermore, one or more of the method steps, in particular a sequence of method steps and/or the whole method 200 may repeatedly be performed.

At method step 222, a first set of data entities is provided, wherein each of the data entities is indicative of at least one property of a manufacturing of a respective product. In some advantageous modifications, each of the data entities is an image of a powder layer and is indicative of the homogeneity of the powder within the powder layer.

At method step 223, the first set of data entities is prefiltered by a predetermined, in particular, pre-trained classification model. Alternatively, the first set of data entities is prefiltered by predetermined statistical criteria. Alternatively, the first set of data entities is manually prefiltered.

At method step 224, one or more labels are acquired for a data entity of the first set of data entities from a first agent of a first group of agents. In some advantageous modifications, the labels are acquired via a user interface from a first human user being the first agent.

At method step 226, a set of labeling metrics is determined based on the acquiring from the first agent.

At method condition 210, it is determined, whether labels have been acquired for all data entities of the first set of entities or if other criteria such as the elapse of a predetermined time span are fulfilled, and in this case - which is symbolized by <y> - the method is continued at method step 242. Otherwise - symbolized by <n> - the method steps 224 and 226 are repeated for one or more further data entities of the first set of data entities.

In parallel or in sequence to method steps 222, 226 and evaluating method condition 210, the method steps 225 and 227 are performed and the method condition 211 is evaluated, wherein the method step 225 is like the method step 224, but performed for a second agent of a second group of agents, also being a human user or being an agent based on artificial intelligence. Correspondingly, at method step 227, a set of labeling metrics for the second agent is determined; and at the method condition 211 it is evaluated whether labels for all data entities of the first set of data entities have been acquired from the second agent or if other criteria such as the elapse of the predetermined time is fulfilled.

At method step 242, the labels and the set of labeling metrics are stored in a distributed database for each of the data entities, for which labels have been acquired, and for each of the agents. In some advantageous modifications, the method steps 222-227 as well as the method conditions 210 and 211 are comprised by a labeling method 220 and may be carried out by a labeling system. Moreover, also the method step 242 may be comprised by the labeling method 220 for generating a training set and may be carried out by a labeling system.

At method step 252, the labels and the data entities are retrieved from the distributed database. In some advantageous modifications, the method step 252 is comprised by a validation method 250 for training a classification model and may be carried out by a validation system.

At method step 254, which may also be comprised by the validation methods 250, the classification model is trained based on a training set, wherein the training set comprises the data entities and the respective labels.

At method step 256, which may also be comprised by the validation method 250, the trained classification model is validated based on predefined criteria, whereby a classifier score is yielded.

At method step 258, which may also be comprised by the validation method 250, a labeling score model is trained based on the data entities, the respective labels, the sets of labeling metrics and the classifier score.

At method step 244, which may also be comprised by the validation method 250, the trained classification model and the labeling score model are stored in the distributed database.

As method step 248, which may - in some advantageous modifications -be comprised by the labeling method 220 and, accordingly, be carried out by the labeling system, the labeling score model is retrieved from the distributed database.

At method step 228, which may also be comprised by the labeling method 220, a labeling score is determined for the first agent based on the labeling score model, the respective labels and set of labeling metrics. In some advantageous implementations, the labeling score is provided to the first agent, which allows to give continuous automated feedback on the performance/quality/accuracy of the labeling of the first agent.

At method step 232, which may also be comprised by the labeling method 220, the labeling score for the first agent, the respective set of metrics and labels are provided to the second agent, in particular, after acquiring labels from the first and/or second agent has been finished.

At method step 234, which may also be comprised by the labeling method 220, an agent classification score with respect to one or more of the data entities acquired from the first agent and an agent labeling score with respect to the labeling score and the set of labeling metrics of the first agent are acquired, after determining the labeling score for the first and for the second agent, from the second agent. Correspondingly, the method steps 229, 233 and 235 are performed, wherein the method step 229 corresponds to method step 228, the method step 223 corresponds to method step 232 and the method step 235 corresponds to method step 234, wherein the roles of the first and the second agent have been exchanged.

At method condition 218, it is determined, whether a further iteration of the method 200 - i.e., starting from method step 222 or 223 or method steps 224 and 225 is to be performed, which is symbolized by <y>. Otherwise, symbolized by <n>, the method ends at the method end 204.

When one or more further iterations are to be performed - i.e. method condition 218 yields <y> -, these iterations may be based on the first set of data entities or on one or more further sets of data entities, so that, consequently, a further set of data entities is provided at method step 222. Moreover, at method step 223, in some advantageous modifications, the respective set of data entities is filtered with the classification model of the previous iteration. Moreover, in some advantageous modifications, the training set for training the classification model further comprises the agent classification scores acquired in a previous iteration. Moreover, in some advantageous modifications, the training of the labeling score model is further based on the agent classification scores and/or the agent labeling scores of one of the previous iterations.

In some advantageous modifications, the labeling method 220 and the validation method 250 are performed in parallel, wherein a labeling score is directly determined and provided to the respective agent for a particular data item and respective labels after the respective labels and the respective set of labeling metrics have been acquired based on a predetermined labeling score model or on a labeling score model of one of the previous iterations. This may beneficially allowed to reduce a time span between entering labels and receiving feedback, so that the quality of the labeling may be enhanced.

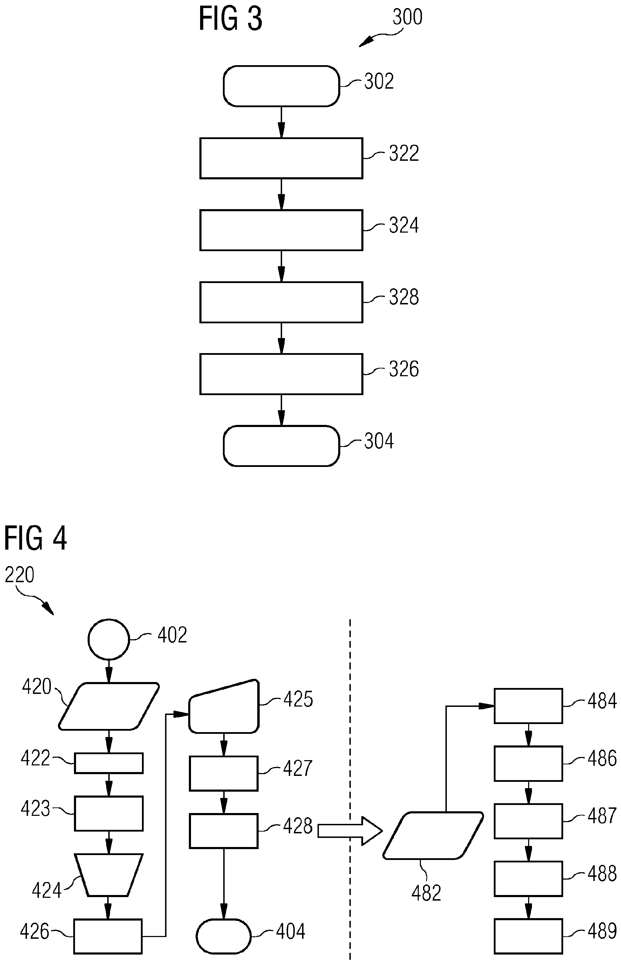

Fig. 3 shows a flowchart of a method 300 for controlling a manufacturing process according to an embodiment of the invention. In some advantageous implementations, the method 300 is performed by the controlling apparatus 100 of figure 1, which is adapted accordingly.

In an exemplary embodiment, the method 300 comprises the method steps 322, 324, 326 and 328. The method 300 starts at the start of the method 302 and ends at the end of the method 304. Furthermore, one or more of the method steps, in particular, a sequence of method steps and/or the whole method 300 may be performed repeatedly. Thereby, in some advantageous implementations, multiple production runs may be performed and controlled.

At method step 322, a data entity being indicative of at least one property of a manufacturing of a respective product such as the homogeneity of a powder layer is acquired.

At method step 324, a classification model is retrieved. In some advantageous modifications, the classification model is retrieved from a data storage 104 of the controlling apparatus 100. Alternatively or additionally, the classification model is retrieved from a distributed database such as the distributed database 140.

At method step 328, the manufacturing of the product is classified based on the data entity and the classification model.

At method step 326, the at least one process parameter is adapted based on the classifying.

In some advantageous modifications, the classification model is trained by the method 200.

Fig. 4 represents a flowchart of a labeling method 220 for generating a training set, the method 220 according to an embodiment of the invention. Moreover, Fig. 4 shows details of an implementation of the method 220 based on encryption and smart contracts.

In an advantageous implementation, the labeling method 220 starts at the start of the method 402 and ends at the end of method 404 and comprises the following method steps:
At method step 420, an event is received that indicates that one or more additional data entities are available. Such data entities are, in some advantageous modifications, continuously acquired from a manufacturing system, in particular, from a sensor assembly of the manufacturing system.

At method step 422, the data entities are received and arranged into a set of data entities. In some advantageous modifications, the set of data entities may also comprise data entities received from previous events and being stored in a data storage such as a distributed database.

At method step 423, the data entities of the set of data entities are prefiltered. In some advantageous modifications, this prefiltering is implemented as described with respect to method step 223.

At method step 424, which may relate to method step 224, a user starts to review the data entities and to enter one or more labels for some or all of the data entities of the set of data entities.

While the user enters labels, labeling metrics are acquired at method step 426.

At method step 425, a label or several labels with respect to one of the data entities are created based on the input entered by the user.

At method step 427, the created labels and the respective data entities are encrypted.

At method step 428, a transaction is started based on a smart contract stored in the distributed database, wherein the following steps of the smart contract are performed: At method step 482, the smart contract receives the encrypted data. At method step 484, the data is decrypted. At method step 486, the decrypted data is evaluated based on the data entities, the labels and the set of labeling metrics and, at method step 487, a labeling score for the user based on the data of the transaction is calculated. At method step 488, a further transaction is started, wherein, at method step 489, the calculated labeling score is stored in the distributed database and accounted to the user or to a group to which the user is assigned to.

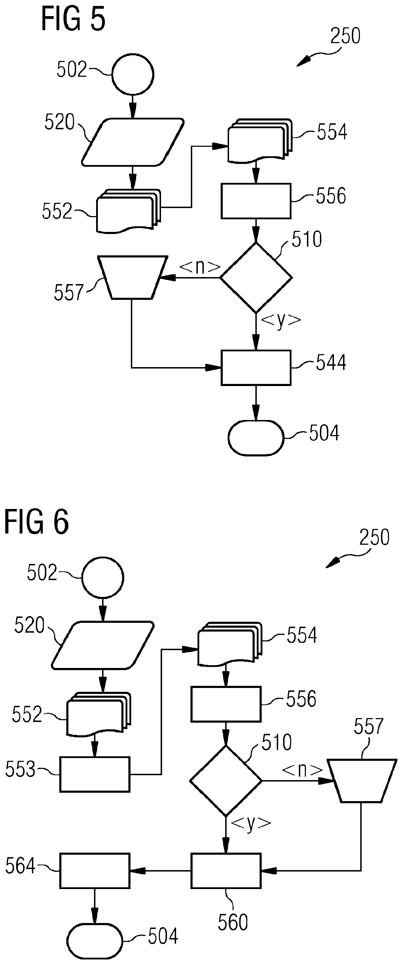

Fig. 5 shows a flowchart of a validation method 250 with respect to training a classification model, the method 250 according to an embodiment of the invention. Moreover, Fig. 5 shows further details of some advantageous implementations of the method 250.

In an exemplary embodiment, the method 250 starts at the start of the method 502 and ends at the end of the method 504, and comprises the method condition 510 as well as the method steps 520, 544, 552, 554, 556 and 557.

At method step 520, it is determined, whether acquiring labels for a set of data entities is finished. This may, in some advantageous modifications, be the case if a certain time span elapsed or if some or all of the data entities of the set of data entities have been acquired or if a labeling method such as the labeling method 220 or a respective iteration of it is finished.

After entering of labels has been finished according to step 520, all data such as the data entities of a particular set of data entities, respective labels and labeling metrics are collected from a distributed database, at method step 552.

At method step 554, which may correspond to method step 254, a classification model is trained based on a training set comprising the data collected from the distributed database.

At method step 556, which may correspond to and may be implemented according to method step 256, the trained classification model is validated based on predefined criteria, wherein a classifier score is yielded.

At method condition 510, it is determined whether the trained classification model fits with predetermined conditions such as a predetermined range for the classifier score or a classification of a predetermined set of data entities as a validation set of data entities.

If this is not the case - symbolized by <n> -, an input from a supervisor is acquired at method step 557, whereby one or more parameters of the classification model, i.e., the trained classification model, are fine-tuned.

After step 557, or when method condition 510 was fulfilled - symbolized by <y> -, method step 544, which may relate to method step 244, is performed, wherein the trained classification model is sent to a labeling system and/or is stored in the distributed database.

Fig. 6 represents a flowchart of a further modification of the validation method 250 - or a part thereof - according to an embodiment of the invention. This further modification relates to an implementation, wherein one or more or all of the agents are agents based on artificial intelligence. Moreover, this implementation is combined with one of the previous implementations for a system of human users as agents as well as artificial intelligence-based agents.

In an exemplary embodiment of this further modification of method 250, method 250 further comprises the method steps 553, 560, and 564.

Method step 553 is performed after collecting all data from the distributed database - i.e. method step 552 - and at method step 553, their labels and sets of labeling metrics as well as respective data entities acquired from agents that are agents based on artificial intelligence are evaluated and compared against corresponding data, such as corresponding labels, sets of labeling metrics and data entities acquired from human users or previously stored as a predetermined evaluation data.

At method step 560, one or more agents based on artificial intelligence are generated for a further iteration based on the collected data and/or the trained classification model. In some advantageous implementations, the artificial intelligence agents are generated by modifying the trained classification model by random variations of parameters of the classification model. In some advantageous implementations, the artificial intelligence agents are generated by a genetic algorithm. For this purpose, in some further implementations, the artificial intelligence agents are selected based of their performance of previous iterations and/or further agents are generated based on the most successful agents and/or wherein a predetermined number of worse performing agents - i.e. having a low labeling score - are removed from a pool of agents.

Likewise, human user may be excluded from a group of (human) agents, if the labeling score of this user is below a predetermined threshold and/or if this user is among a set of (human) agents of a predetermined size which perform worst - i.e. in particular, if this user is among the 5 worst performing (human) agents.

At method step 564, the agents based on artificial intelligence, generated at method step 560, are stored in a distributed database or an AI labeling hub. Accordingly, the artificial intelligence agents are retrieved, in some advantageous modifications of a labeling method such as the labeling method 220, from the distributed database and, at method step 224 or 225, labels are acquired from these agents based on artificial intelligence. In some implementations the AI labeling hub is a computer system such as an arrangement of one or more servers, wherein the agents based on artificial intelligence are stored on the server(s) and wherein the server(s) provide an environment for running the artificial intelligence based agents.

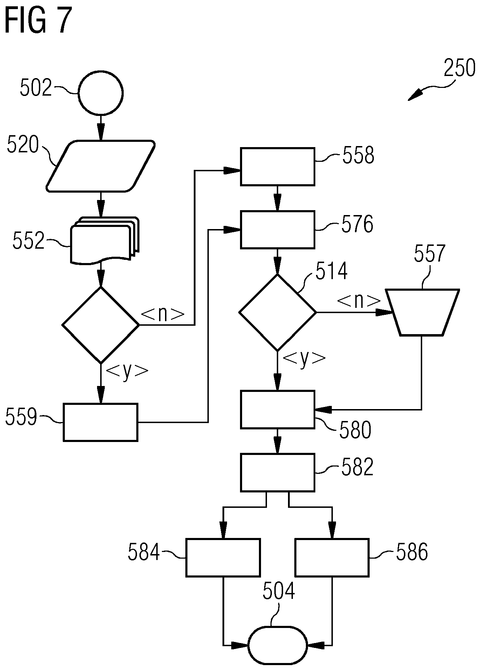

Fig. 7 represents a flowchart of a method for generating a smart contract as part of a further modification of a validation method according to an embodiment of the invention, wherein the smart contract is adapted to determine a labeling score.

In an exemplary embodiment of this further modification of method 250, method 250 further comprises the method conditions 512 and 514 and the method steps 558, 559, 576, 577, 580, 582, 584, and 586.

After collecting all data from the distributed database - i.e. method step 552 -, at method condition 512, it is determined whether one or more agent classification scores and/or one or more agent labeling scores have been acquired. If this is the case - symbolized by <y> - the labeling score model is trained based on the data entities, the labels, the sets of labeling metrics and the classifier score as well as the agent classification scores or, respectively, the agent labeling scores, at method step 559. Furthermore, prior to training the labeling score model, the agent labeling scores and/or the agent classification scores are, in some advantageous further modifications, transformed to one or more numerical parameters based on a statistical method or based on artificial intelligence. This may advantageously allow to gather agent labeling scores or agent classification scores - at least partially - based on a free-form text input, which is then transformed into numerical parameters.

Otherwise - symbolized by <n> -, at method step 558, which may relate - in some advantageous implementations - to method step 258, the labeling score model is trained based on the data entities, the labels, the sets of labeling metrics and the classifier score.

At method step 576, after training the labeling score model in one of the steps 558 or 559, the trained labeling score model is validated based on predefined criteria such as predetermined minimum or maximum labeling scores, test data for the labeling score model and/or a statistic analysis.

At method condition 514, it is determined whether the trained labeling score model fits with predetermined conditions such as the validation of step 576, and if this is not the case - symbolized by <n>, an input from a supervisor is acquired at method step 577, whereby one or more parameters of the labeling score model are fine-tuned, whereby the labeling score model is adapted such that, after fine-tuning, it passes the validation and such that it yields, at least for a training set of validation data, labeling scores in a predetermined range for respective sets of labeling metrics of the training set of validation data.

According to some advantageous embodiments of the invention, the labeling score model, especially the trained labeling score model, is adapted such that based on a respective set of labeling metrics, it yields a higher labeling score for an agent:
- who entered more labels than another agent,
- who entered a predetermined amount of labels in a shorter time span,
- who entered labels for entities that have a high influence on training the classification model - i.e. in the sense of active learning;
- who entered labels that are similar to labels of a group of this agent or of other groups of agents or
- who received a high agent classification score or agent labeling score from one or more other agents.

Likewise, another agent, for whom the previous criteria are not met or are only met to a lower extent, will be yielded a lower labeling score by the labeling score model, wherein, in some further modifications, the labeling score is restricted to a predetermined range, wherein the predetermined range starts at a predetermined positive number, in particular the bigger than five, which may advantageously allow to mitigate the effects caused by singularities with regard to the convergence of the labeling score model, when training that labeling score model, and/or instabilities when determining the respective labeling score based on the labeling score model.

Moreover, in some embodiments, the determining of the labeling score is controlled by fixed boundaries such as relaxations or weights between different labelling metrics. In some modifications, a higher quality of labeling has a higher weight than the time span required for labeling. According to some further modifications, a wrong label may be equated with a time malus of 2 Minutes, wherein, in particular, a wrong label may be determined based on the labeling of other agents.

After method step 577, or when method condition 514 was fulfilled - symbolized by <y> -, method step 580 is performed, wherein a smart contract for determining labeling scores is generated based on the trained - and potentially fine-tuned - labeling score model.

At method step 582, a transaction on the distributed database is started, wherein at method step 584 the generated smart contract is deployed to the distributed database - i.e. in particular stored in the distributed database -, and wherein at method step 586 smart contracts of previous iterations - if any - are invalidated.

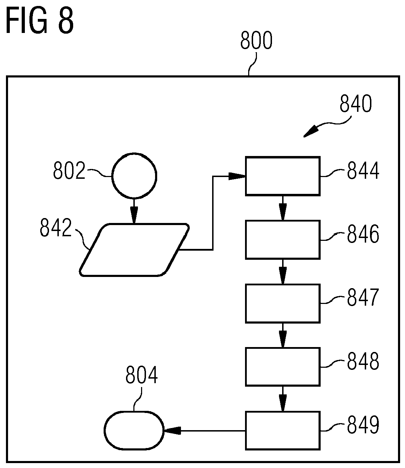

Fig. 8 shows a smart contract 800 for determining a labeling score and its implementation as a method 840 according to an embodiment of the invention.

According to some advantageous modifications, such a smart contract 800 is generated by the validation method 250. Moreover, according to some advantageous modifications, such a smart contract is retrieved from a distributed database and is executed by/within a labeling method 220 in order to determine the respective labeling score of an agent.

In an exemplary embodiment, the method 840 comprises the method steps 842, 844, 846, 847, 848, and 849, starts at method stand 802 and ends at method end 804.

At method step 842, for a respective agent, the one or more labels and the set of labeling metrics and the labeling score model are provided. In some advantageous implementations, these may be retrieved from a distributed database. Alternatively, this may be retrieved from a labeling system. Alternatively or additionally, the smart contract may be performed on a labeling system such that the labels, the labeling metrics and the labeling score model are readily stored and available at the labeling system.

At method step 844, if the data is stored in encrypted form and e.g. retrieved from the distributed database, the data is decrypted.

At method step 846, the set of labeling metrics and the labels are applied to the labeling score model and, accordingly at method step 847, by the labeling score model, a respective labeling score is yielded for the respective agent, i.e. the first agent or another agent.

At method step 848, a further transaction is started - in some advantageous implementations on the distributed database -, wherein, at method step 849, the yielded labeling score is stored in a data storage, in particular in the distributed database, and accounted to the respective agent or to a group to which the agent is assigned to.

In some advantageous modifications, the smart contract 800 is used and, accordingly the method 840 is performed for determining the labeling score in method step 228.

Although the invention has been shown and described with respect to certain preferred embodiments, equivalents and modifications will occur to others skilled in the art upon reading and understanding the specification. The present invention includes all such equivalents and modifications and is limited only by the scope of the appended claims.

## Claims

1. A computer-implemented method (200) for training a classification model for controlling a manufacturing process, wherein products are manufactured according to at least one process parameter and wherein at least one property is indicative of the manufacturing of the products, the method comprising, for generating a training set and for training the classification model:
- (222) providing a set of data entities, each of the data entities being indicative of at least one property of a manufacturing of a respective product;
- (224) acquiring one or more labels for each of the data entities from an agent;
- (226) determining a set of labeling metrics based on the acquiring from the agent;
- (254) training the classification model, wherein the training set comprises the data entities and the respective one or more labels;
- (256) validating the trained classification model based on predefined criteria and yielding a classifier score;
- (258) training a labeling score model based on the data entities, the respective one or more labels, the sets of labeling metrics and the classifier score; and
- (228) determining a labeling score for the agent based on the labeling score model and the respective one or more labels and set of labeling metrics.

2. The computer-implemented method (200) of claim 1, wherein:
the manufacturing process is a process for additive manufacturing;
each of the data entities comprises an image of a powder layer of a powder bed (62)for manufacturing a layer of the respective product; and
the at least one property is a homogeneity of powder of the respective powder layer.

3. The computer-implemented method (200) of claim 1, wherein each of the data entities comprises one of a group comprising: an image, a video, a material density, a sound recording, and a concentration of a chemical substance.

4. The computer-implemented method (200) of any one of the preceding claims, wherein the set of labelling metrics comprises one of the following groups:
- a time span during which the one or more labels for the respective data entity have been acquired from the agent;
- a time span between acquiring one label and a further label from the agent;
- an amount of required energy;
- an effort for labeling a data entity;
- an importance score for a data entity;
- a count of labels for a data entity of the data entities;
- a count of labels for the set of data entities;
- a count of labels acquired from a group of agents;
- a count of labels acquired from the agent;
- a measure of the similarity between labels across the group;
- a measure of similarity of labels across multiple/different groups of agents;
- assigning a new label to a particular data entity; and
- an agent classification score.

5. The computer-implemented method (200) of any one of the preceding claims, being iteratively performed with a first and one or more further iterations, wherein in the further iterations the labeling score is determined based on the labeling score model of a respective previous iteration.

6. The computer-implemented method (200) of claim 5, wherein, in the further iterations, the data entities of the first set or a further set are pre-filtered (223) by the classification model, which has been trained in the respective previous iteration.

7. The computer-implemented method (200) of any one of the preceding claims, further comprising a labeling method (220) for generating the training set and a validation method (250) for training the classification model;
wherein the labeling method (220) at least comprises the acquiring of the labels (224), the determining of the labeling metrics (226), and the determining of the labeling score (228) and further comprises:
- (242) storing, for each of the data entities, the one or more labels and the set of labeling metrics in a distributed database; and
- (248) retrieving the labeling score model from the distributed database;
and wherein the validation method (250) at least comprises the training of the classification model (254), the validation of the classification model (256), and the training of the labeling score model (258) and further comprises:
- (252) retrieving the one or more labels for each of the data entities from the distributed database; and
- (244) storing the trained classification model and the labeling score model in the distributed database.

8. The computer-implemented method (200) of claim 7,
wherein the agent is a first agent of a first group of agents;
wherein the labeling method (220) further comprises:
- (225) acquiring one or more labels for each of the data entities from a second agent of a second group of agents;
- (227) determining a set of labeling metrics based on the acquiring from the second agent;
- (242) storing, for each of the data entities and for each of the agents, the one or more labels and the set of labeling metrics in a distributed database;
- (228, 229) determining a labeling score for each of the agents based on the labeling score model and the respective one or more labels and set of labeling metrics;
and wherein the validation method (250) further comprises:
- (252) retrieving the one or more labels for each of the data entities and for each of the agents from the distributed database.

9. The computer-implemented method (200) of claim 8, wherein the labeling score for an agent of one of the groups of agents, the respective set of metrics and the one or more labels of one of the data entities acquired from this agent are provided to this agent or a further agent of the respective group.

10. The computer-implemented method (200) of claim 8 or 9, wherein the labeling score for an agent of one of the groups of agents, the respective set of metrics and the one or more labels of one of the data entities acquired from this agent are provided (232, 233) to an agent of another group of the groups of agents depending on whether, during a current iteration of the labeling method, labels for the data entities may still be acquired from the other group.

11. The computer-implemented method (200) of any one of claims 8 - 10,
wherein the labeling method further comprises:
- (235) acquiring at least from the first agent, after determining the labeling score at least for the first and the second agent, an agent classification score with respect to the labels for one or more of the data entities acquired from the second agent and an agent labeling score with respect to the labeling score and the set of labeling metrics of the second agent;
and wherein:
the training set for training the classification model further comprises the agent classification score; and
(258) the training of the labeling score model is further based on the agent classification score and the agent labeling score.

12. The computer-implemented method (200) of any one of the preceding claims, wherein, for each of the data entities, the one or more labels and the set of labeling metrics of the first agent are encrypted (427) by a public key and are stored in encrypted form in a data storage;
and wherein, after acquiring labels during a current iteration of the labeling method has been finished, the encrypted form is retrieved from the data storage and is decrypted (482) .

13. A method (300) for controlling a manufacturing process, wherein products are manufactured according to at least one process parameter and wherein at least one property is indicative of the manufacturing of the products, comprising:
- (322) acquiring a data entity, the data entity being indicative of at least one property of a manufacturing of a respective product;
- (328) classifying the manufacturing of the product based on the data entity and a classification model; and
- (326) adapting the at least one process parameter based on the classifying;
wherein the classification model is training by a computer-implemented method (200) comprising:
- (222) providing a set of data entities, each of the data entities being indicative of at least one property of a manufacturing of a respective product;
- (224) acquiring one or more labels for each of the data entities from an agent;
- (226) determining a set of labeling metrics based on the acquiring from the agent;
- (254) training the classification model, wherein the training set comprises the data entities and the respective one or more labels;
- (256) validating the trained classification model based on predefined criteria and yielding a classifier score;
- (258) training a labeling score model based on the data entities, the respective one or more labels, the sets of labeling metrics and the classifier score; and
- (228) determining a labeling score for the agent based on the labeling score model and the respective one or more labels and set of labeling metrics.

14. A controlling apparatus (100) for controlling a manufacturing process, wherein products are manufactured by a manufacturing system (10) according to at least one process parameter and wherein at least one property is indicative of the manufacturing of the products, the controlling apparatus (100) comprising:
a sensor assembly (102) adapted to acquire a data entity, the data entity being indicative of at least one property of a manufacturing of a respective product;
a data processing apparatus (108) adapted to classify the manufacturing of the product based on the data entity and a classification model; and
a control interface (106) adapted to output a control signal such that the at least one process parameter is changed based on the classifying;
wherein the data processing apparatus (108) is further adapted to receive the classification model from a data storage (104) of the controlling apparatus, onto which the classification model is stored, or from a distributed database (140), the classification model being generated by a computer-implemented method (200) comprising:
- (222) providing a set of data entities, each of the data entities being indicative of at least one property of a manufacturing of a respective product;
- (224) acquiring one or more labels for each of the data entities from an agent;
- (226) determining a set of labeling metrics based on the acquiring from the agent;
- (254) training the classification model, wherein the training set comprises the data entities and the respective one or more labels;
- (256) validating the trained classification model based on predefined criteria and yielding a classifier score;
- (258) training a labeling score model based on the data entities, the respective one or more labels, the sets of labeling metrics and the classifier score; and
- (228) determining a labeling score for the agent based on the labeling score model and the respective one or more labels and set of labeling metrics.

15. A computer-implemented method (250) for generating a smart contract (800) for determining a labeling score (228), the method comprising:
- (258) training a labeling score model based on data entities, at least one label for each data entity and at least one set of labeling metrics, wherein the at least one labeling metrics is indicative of an acquiring of the label for the respective data entity;
- (244) storing, after training, the labeling score model in a distributed database;
- (580) generating a smart contract (800) that comprises a method (840) for determining a labeling score, wherein the method (840) at least comprises applying (846) a set of labeling metrics, which are indicative of an acquiring of labels from an agent, to the trained labeling score model, whereby the labeling score model is performed and yields, depending on the labeling metrics of the agent, a labeling score; and
- (584) storing the smart contract in the distributed database.
